# EUROPEAN PATENT SPECIFICATION

(11) **EP 3 358 441 B1**
(45) Date of publication and mention of the grant of the patent: **10.11.2021**
(21) Application number: 18164033.5
(22) Date of filing: 17.12.2015
(51) Int. Cl.: G06F 1/16

(54) **RECONFIGURABLE SLED FOR A MOBILE DEVICE**
REKONFIGURIERBARER SCHLITTEN FÜR EINE MOBILE VORRICHTUNG
TRAÎNEAU RECONFIGURABLE POUR DISPOSITIF MOBILE

(30) Priority: 31.12.2014 CN 201420862309 U; 14.12.2015 US 201514967536
(43) Date of publication of application: 08.08.2018
(62) Divisional of application: 15200870.2
(73) Proprietor: Hand Held Products, Inc., Fort Mill, SC 29707 (US)
(72) Inventor: LU, Jun, Morris Plains, NJ New Jersey 07950 (US); REN, Jie, Morris Plains, NJ New Jersey 07950 (US); ZHANG, Jian, Morris Plains, NJ New Jersey 07950 (US); WANG, Zhuling, Morris Plains, NJ New Jersey 07950 (US); SMITH, Taylor, Morris Plains, NJ New Jersey 07950 (US)
(74) Representative: Haseltine Lake Kempner LLP

(56) References cited:
- WO-A2-2012/177661
- US-A1- 2014 158 769
- US-A1- 2014 171 150

## Description

### FIELD OF THE INVENTION

The present invention relates to the field of electronic device accessories and, more specifically, to a reconfigurable sled to expand the capabilities of a mobile device.

### BACKGROUND

Mobile devices (e.g., smart phones, tablets, personal digital assistant (PDA), etc.) that include built-in cameras are widely available to consumers. Typically, these cameras are placed on the side of the electronic device opposite the primary user-interface (*e.g.*, a touch-screen and/or keypad). In other words, the cameras are typically placed on the backside of the mobile device.

For certain functions (*e.g.*, indicia reading), pointing the end (i.e., edge) of the mobile device at the intended target is more familiar to a user. When pointing the mobile device in this manner, however, the camera is facing downward rather than at the target.

An optical redirection adapter for redirecting the imaging of a mobile device has been disclosed (e.g., US 20140232930 A1). This adapter is fixed and cannot be reconfigured. In other words, to use the mobile device's camera normally, a user must remove the adapter. In addition, this adapter does not communicate with the mobile device.

Scanning sleds (*i.e.*, sleds) are commercially available (e.g., HONEYWELL CAPTUVO^{tm}) to adapt a mobile device for indicia reading. The sled typically surrounds the mobile device like a case and leaves the graphical user interface (GUI) and camera exposed. The sled is an active device and may include a power source, a scanning subsystem (e.g., laser scanner or imaging scanner) a processor (e.g., a microcontroller (MCU)), an illumination subsystem, and/or an aiming subsystem. These devices are communicatively coupled with the mobile device (e.g., electrical connection, BLUETOOTH, etc.) and may be controlled by applications running on the mobile device. As a result, these devices may be expensive and bulky.

WO2012/177661 discloses a case for a portable electronic device having a camera component including a housing suitable for coupling with the portable electronic device. The housing can have an opening configured to allow light to pass therethrough. The case can also include a light-redirecting component integrated with the housing and configured to receive the light passing through the opening and redirect the light to the camera component. US2014/158769 discloses an attachment for a camera device, comprising at least one of a target generating mechanism, a proximity sensor, illumination that is optimized for bar code reading, optics that provide an alternative optical path to the camera device, and a supplementary lens system that is optimized for bar code reading.

Therefore, a need exists for a reconfigurable sled that (i) has the performance of a traditional scanning sled but without the added cost and bulkiness and (ii) performs like a fixed adapter but without limiting a user's use of the mobile device's camera.

### SUMMARY

The invention is set out in accordance with the appended claims. Disclosed but not claimed is a method to enable a mobile device mounted in a reconfigurable sled for indicia reading. The method includes the step of acquiring images using the mobile device's imaging subsystem. The imaging subsystem includes a camera and an illuminator. The method also includes the step of sliding a mirror mounted on the reconfigurable sled into the camera's field-of-view. In this position, the mirror changes the imaging direction of the camera. The mirror has visible markings, and the method includes the step of enabling the mobile device for indicia reading when these visible markings are detected and properly located in the acquired images.

Preferably, enabling the mobile device for indicia reading includes activating the camera's illuminator.

Preferably, enabling the mobile device for indicia reading includes rotating the acquired images.

Preferably, enabling the mobile device for indicia reading includes adjusting an autofocus algorithm controlling an autofocus lens that is part of the mobile device's camera.

Preferably, enabling the mobile device for indicia reading includes starting or stopping an application running on the mobile device.

The present invention embraces an indicia-reading system. The system includes a mobile device that has a camera, an illuminator, and a processor. The processor is configured for running applications. The system also includes a reconfigurable sled. The reconfigurable sled is configured for holding the mobile device and is enabled to change the mobile device's imaging characteristics. In this regard, the reconfigurable sled has a mirror to redirect the camera's imaging direction when the mirror is moved into the camera's field-of-view. The mirror has visible markings that appear in images taken of the field-of-view when the field-of-view is reflected from the mirror. An indicia reading application running on the mobile device configures the mobile device to (i) acquire images, (ii) analyze the acquired images for the visible markings, and (iii) adjust the mobile device for indicia reading if the visible markings are detected.

Preferably, a lens is integrated with the reconfigurable sled for adjusting the focus of the camera when the mirror is moved into the camera's field-of-view.

Preferably, the reconfigurable sled includes a motion control subsystem for moving the mirror; the motion control subsystem is electrically coupled to the mobile device and controllable by the indicia reading application.

Preferably, the indicia reading system includes an aimer subsystem for projecting an aiming pattern into the camera's field-of-view to help a user align an indicium for reading. In one possible embodiment, the light for the aimer subsystem is provided by the mobile device's illuminator. In another possible embodiment, an aimer light source (e.g., light emitting diode) is included in the indicia reading system that is separate from the mobile device.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 graphically depicts three views of an exemplary mobile device.
Figure 2 graphically depicts a front and back perspective view of an exemplary embodiment of the reconfigurable sled for a mobile device.
Figure 3 graphically depicts a side view of an exemplary mobile device and the directions corresponding to an exemplary first configuration and an exemplary second configuration.
Figure 4 graphically depicts a sectional side view of an exemplary embodiment of the reconfigurable sled in a first configuration and a second configuration.
Figure 5 graphically depicts a sectional side view of an exemplary embodiment the reconfigurable sled in a first configuration and a second configuration.
Figure 6 graphically depicts a sectional side view of an exemplary embodiment of a locking feature used to lock moving elements in the reconfigurable sled.
Figure 7 graphically depicts an exemplary image taken by a mobile device in a reconfigurable sled showing the visible markings of the mirror.
Figure 8 graphically depicts a flow chart of an exemplary method to enable a mobile device mounted in the reconfigurable sled for indicia reading.

### DETAILED DESCRIPTION

A scanning sled is like a case for a mobile device but has capabilities to enhance the mobile device's functionality. Barcode scanning, for example, may be enabled by the scanning sled. In this regard, dedicated batteries, electronics, and optics, may be integrated into this scanning sled. The scanning sled may be electrically connected and/or communicatively coupled wirelessly with the mobile device, and the mobile device may run software (i.e., applications) that configures the scanning sled and/or mobile device. The scanning sled is also ergonomically designed to help a user handle the device in a convenient and intuitive way. For example, indicia readers are typically designed to function in a "point-and-shoot" fashion. As a result, the scanning sled is typically configured to scan barcodes in a direction along the long edge of the mobile device.

Scanning sleds may be complicated electronic devices and may be expensive to design and manufacture. Since these devices may be customized to accommodate a particular mobile device, this could mean obsolesce within a few years in today's rapidly changing mobile device market. Rather than designing expensive scanning sleds for a changing market, a more cost efficient strategy would be to design a simpler sled and utilize more of the features of the mobile device. Today's mobile devices have sophisticated electronics and have reached a point where many scanning sled functions may be easily performed by the mobile device. Therefore, the present invention addresses the need for a sled that has the performance and ergonomics of an active scanning sled but without the added cost and bulkiness.

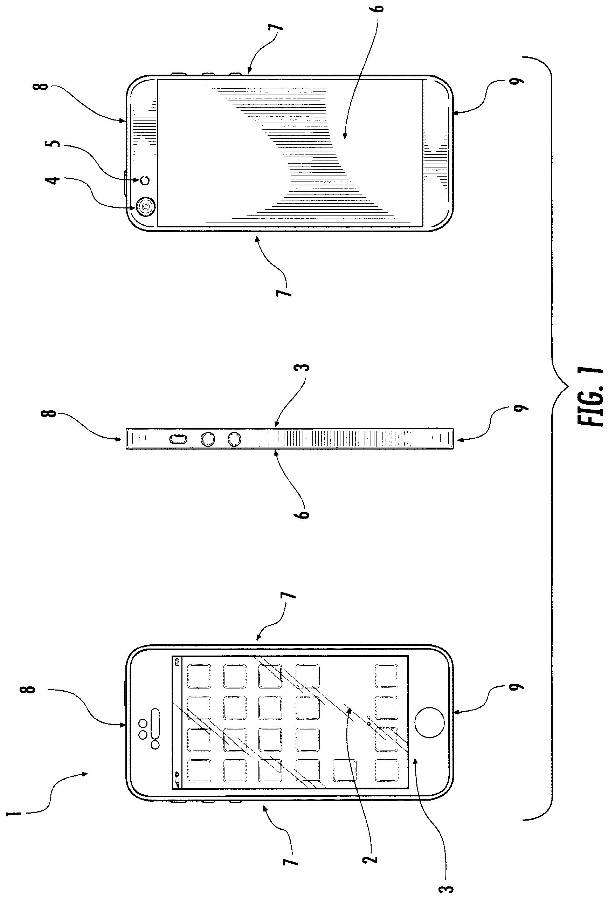

An exemplary mobile device is shown in Figure 1. The mobile device **1** is configured with a graphical user interface (GUI) **2** on its front surface **3**. A camera **4** and its flash (i.e., illuminator) **5** is typically located on the back surface **6.** The sides **7** of the mobile device are typically made longer to make holding convenient. In a normal imaging operation, the mobile device is held with the front surface **3** and GUI **2** facing the user, and the back surface **6** is held facing the target. The user may hold the mobile device either vertically or horizontally to take a picture. A stream of images is typically portrayed on the GUI and a user captures an image by pressing a soft button presented on the GUI. The imaging direction is perpendicular to the back surface **6.** This normal imaging configuration is suitable for occasional images but is not convenient for repetitive barcode scanning.

As mentioned previously when describing the sled, a point-and-shoot configuration is more desirable for indicia reading. To achieve this indicia reading imaging configuration, the mobile device's **1** imaging must be redirected. The direction for indicia reading is typically along the long dimension of the mobile device and away from the top surface **8.** With the imaging aligned in this direction, a user may hold the mobile device **1** like a television remote control. To scan a barcode, a user could (i) hold the mobile device so that the GUI **2** faces the user, (ii) point the top surface **8** of the mobile device at the barcode (i.e., bottom surface **9** away from the barcode), and (iii) interact with indicia reading software running on the mobile device **1** via the GUI **2** to initiate a scan.

A fixed optical redirection adapter may be used for this redirecting the imaging, and such an apparatus has been disclosed (e.g., US20140232930A1). This approach, however, does not provide the functionality of the scanning sled and does not permit the mobile device to image normally unless the apparatus is removed. The redirection adapter does not interact with the mobile device. For example, there is no feedback to alert a user that it has been installed incorrectly. In addition, the mobile device must be configured manually to read indicia (e.g., turn on the illuminator or aimer). Therefore, the present invention also addresses the need for a sled that (i) has the simplicity of a fixed optical redirection adapter, (ii) does not limit the use of the mobile device's camera, and (iii) can interact with an indicia-reading application on the mobile device.

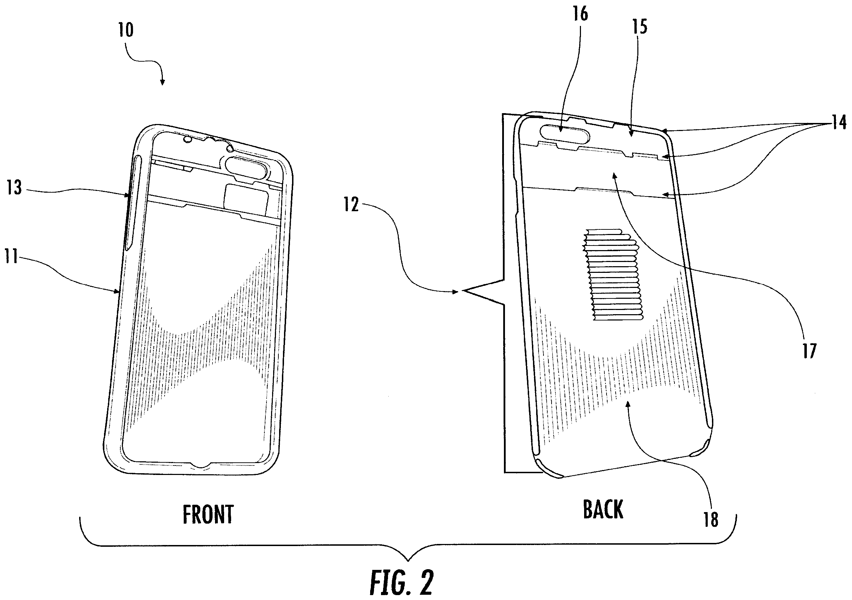

The present invention embraces a reconfigurable case/adapter (i.e., sled) to enable a mobile device (e.g., smartphone, tablet, PDA, etc.) to scan barcodes (i.e., read indicia). An exemplary embodiment of a reconfigurable sled **10** for a mobile device is shown in Figure 2. There are two main components in the sled: a frame **11** and a cover **12.** The frame **11** encloses the sides **7** of the mobile device but may have apertures **13** to allow a user to interact with the mobile device's controls. The frame covers just the edges of the mobile device's front surface **3** to allow for interaction with the GUI **2.** There are guides (e.g., slots) on either side of the frame **11** that serve as tracks to hold the cover **12** to the frame **11** while allowing the cover **12** to slide along the guide.

In the exemplary embodiment of the reconfigurable sled shown in Figure 2, a mobile device **1** may be installed into the sled by first placing the mobile device into the frame. Next, the cover **12** may be engaged with the frame guides (e.g., held by the guides while permitting movement) and slid over the back surface **6** to hold the mobile device in the frame.

The cover **12** may be composed of a plurality of panels connected by hinges (i.e., hingedly connected panels **14).** In the embodiment shown in Figure 2, the top most hinged panel of the cover is the window panel **15.** The window panel **15** is hingedly attached to the frame on the top edge. The window panel **15** is configured with a window **16** through which the camera and illuminator may transmit/receive light. In some embodiments, the window aperture may be covered by a window. This window could be transparent (i.e., glass, fused silica, etc.) or could filter (i.e., color) the light of the illuminator. The filtering could cover all or a portion of the window aperture. In some embodiments, the window could have a pattern applied (e.g., painted, etched, deposited, etc.) to a surface (e.g., as part of an aimer subsystem).

The mirror panel **17** is hingedly connected to the bottom edge of the window panel **15.** The mirror panel **17** has a reflective element (e.g., mirror, prism, etc.) that is attached to the mirror panel surface facing the back surface **6** of the mobile device. When the mirror panel **17** is raised to form an angle (e.g., 45 degrees) with the back surface **6** of the mobile device it folds (i.e., redirects) the imaging direction of the camera **5** (e.g., 90 degrees). In other words, the camera's field-of-view may be repositioned by the mirror.

A slider panel **18** is hingedly connected to the lower edge of the mirror panel. The sides of the slider panel are engaged (i.e., fit into) the guides that are formed into the sides of the frame. The slider panel may be slid along the frame in order to change the positions of the window panel **15** and the mirror panel **17.** A user may slide the panel along manually, or the panel movement may be aided by a spring or a motor. If aided by a spring or motor, then the movement may be triggered by a switch (e.g., button) integrated in the case or by a signal from the mobile device as part of an application (e.g., soft button).

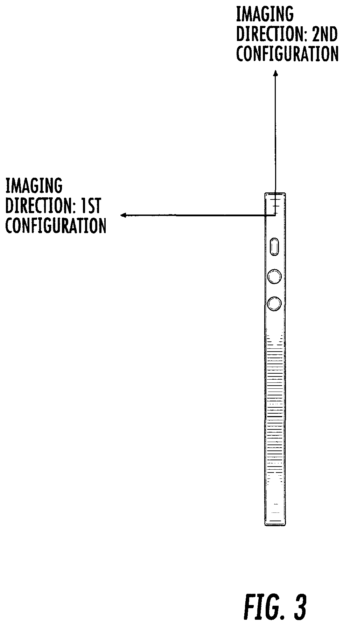

The cover of the sled is typically configured into one of two possible configurations. The imaging directions for the two configurations relative to the mobile device are shown in Figure 3. As shown in Figure 3, a first configuration allows the mobile device to image normally. The imaging direction is normal to the back surface **6** of the mobile device. A second configuration realigns the imaging direction so that it is normal to the top surface **8** of the mobile device **1.**

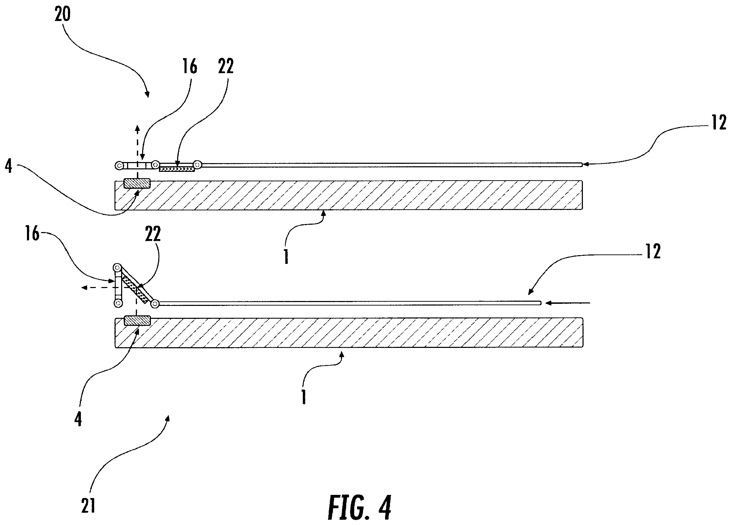

A possible embodiment of the reconfigurable sled is shown in Figure 4. In the first configuration **20.** The panels of the cover **12** lie flat over the back of the mobile device **1.** The window **16** is positioned over the camera so that the mobile device **1** may image normally. The slider panel may be slid towards the top of the mobile device into order to form the second configuration **21.** In the second configuration, a mirror **22** attached to one of the hinged panels is moved into the camera's field-of-view. The mirror **22** folds the camera's optical path but still uses the window **16,** which also is folded at an angle with respect to the mobile device (e.g., 90 degrees).

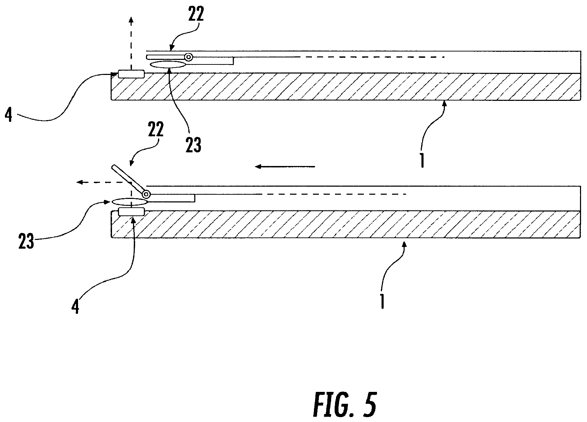

Another possible embodiment of the reconfigurable sled is shown in Figure 5. Here the mirror **22** is mounted via spring-loaded hinge to a sliding panel. A lens **23** is integrated with the mirror and is used for adjusting the focus of the camera **4** (e.g., shorten the minimum focus distance) when the mirror is moved into the camera's field-of-view. As the panel holding the mirror **22** and lens **23** is slid towards the camera **4,** the mirror **22** is repositioned in order to redirect the camera's and/or illuminator's optical path.

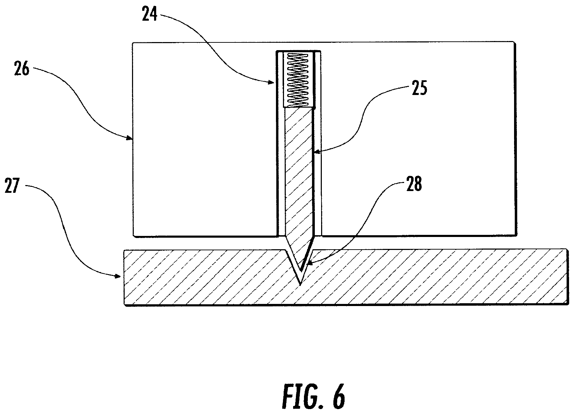

The motion of reconfigurable sled's movable parts may be limited by locking mechanisms. In this way, the sled may be moved into a first configuration (i.e., normal mode) or second configuration (i.e., scanning mode) and held there until a user changes the configuration. A possible embodiment of a locking mechanism is shown in Figure 6. Here a spring-loaded **24** locking element **25** (e.g., pin, ball, etc.) may be configured in a moving part **26** in order to lock the moving part **26** to a fixed part **27.** As the moving part **26** is moved into place, its locking element **25** is received by a mating locking feature **28** (e.g., detent) in the fixed part **27.** It should be noted that the term "locking", as it is used here, implies holding the moving parts in place so that movement out of place is made more difficult but not impossible. In other words, the motion of the locked parts due to typical mobile device use is limited, but a directed effort to move the locked parts is possible without strain. It should also be noted that the moving and fixed parts described might be reversed without any loss of locking functionality.

The mobile device is configured to run software (i.e., applications) to perform tasks related to the reconfigurable sled's configuration. To facilitate this, visible markings, are applied to the mirror (e.g., ink print, laser marking, etc.). The mobile device acquires images and processes them in order to detect the presence and/or location of these markings in the images. The presence of the markings could indicate that the mirror is in the optical path of the mobile device camera. The location of the markings could indicate that the mirror is installed properly.

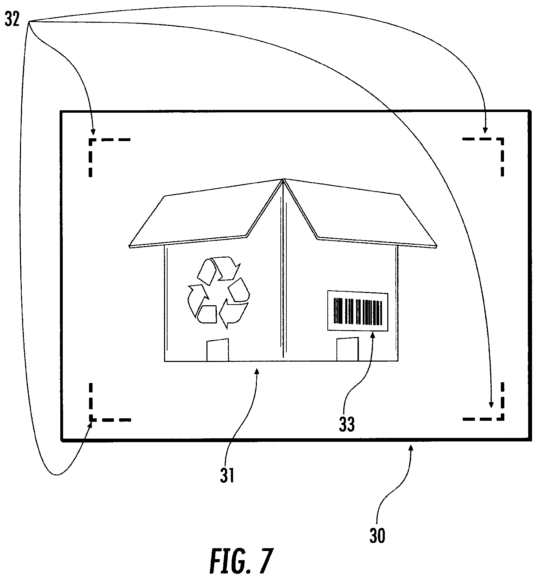

An exemplary image acquired by a mobile device with a mirror **22** in the camera's optical path is illustrated in Figure 7. The exemplary image **30** is of a package **31** with a barcode **33.** Here, the presence of the visible markings **32** could indicate (e.g., to an application running on the mobile device) that this image **30** was taken with the mirror **22** in the camera's optical path. In response, the mobile device may be configured to start/stop an application/process or change some hardware setting in order to facilitate a function (e.g., indicia reading). For example, an indicia-reading application could be launched to detect, scan, and decode at least one barcode **33** in the image **30.** In another exemplary embodiment, the markings could trigger the activation of the camera's illuminator. In another exemplary embodiment, the markings could cause the acquired images to be processed (e.g., rotated) to accommodate the mirror **22.** In still another exemplary embodiment, the markings could trigger an adjustment of algorithms (e.g., autofocus algorithms) controlling the focus of the lens on the mobile device (e.g., to make indicia reading faster).

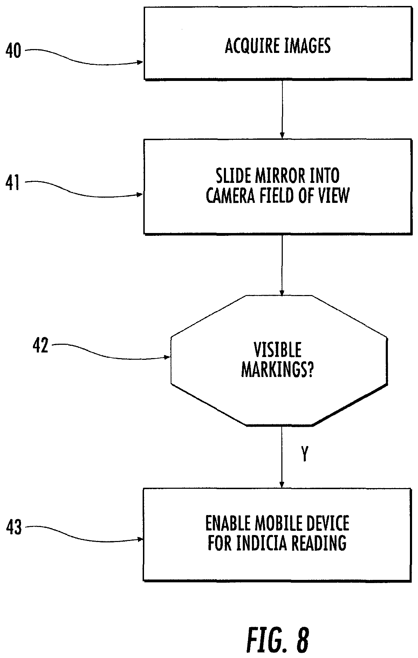

A flowchart of an exemplary method to enable the mobile device mounted in a reconfigurable sled for indicia reading is shown in Figure 8. In this method, images are acquired by the mobile device's imaging subsystem **40.** A mirror with visible markings is moved into the camera's field-of-view to change the imaging direction of the camera **41.** If the visible markings are detected and properly located in the acquired images **42,** then the mobile device is enabled for indicia reading **43.** If the visible markings are not detected then no action may be taken. Alternatively, if the visible markings are detected but not properly located, then an error message may be generated to alert a user and/or prompt the user to adjust the reconfigurable sled in order to configure the mirror properly.

The mobile device, reconfigurable sled, and indicia reading application running on the mobile device work together to form an indicia reading system. There are multiple possible embodiments for this system. For example, while the present invention is typically a passive device, having communication using visible markings, some other possible embodiments could include an active sled.

In an active sled, an electrical connection and/or communication could exist between the sled and the mobile device. In addition, an active sled might have an energy source (e.g., battery) to power some additional features. Such additional features could include, but are not limited to, projecting an aiming pattern onto a target for alignment or moving the mirror via a motion control subsystem. The aiming subsystem could include an aimer light source for generating light. In some embodiments, this light source could be the illuminator **5** of the mobile device, while in other embodiments this light source could be separate from the mobile device and integrate with the sled (e.g., light emitting diode, laser diode, etc.). This aimer light source could be powered by the mobile device's battery or by a battery external to the mobile device. For embodiments using the illuminator **5**, a filter may be used to change the illuminator's color to provide some advantage in aiming (e.g., to make the aimer light source light stand out from the background)

The aimer subsystem could also include an aimer aperture covering the aimer light source to shape the light into an aiming pattern (e.g., line, cross hair, box, etc.). Suitable aiming patterns could provide information corresponding to the orientation and spatial extend of the camera's field-of-view so that when projected onto a target help a user align the mobile device. An aimer lens could be included to project/focus the light from the aimer aperture onto the target.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. An indicia reading system (20), comprising:
a mobile device (1) comprising a camera (4), an illuminator (5), and a processor configured for running applications;
a case (12) for holding the mobile device (1), the case (12) comprising a mirror (22) movable between two configurations, the mirror to redirect an imaging direction of the camera (4) when the mirror (22) is moved into a field-of-view of the camera;
**characterized in that** the mirror (22) comprises visible markings (32) that appear in images of the field-of-view reflected from the mirror (22); and
the indicia reading system (20) further comprises an indicia reading application running on the mobile device (1), the indicia reading application configuring the mobile device (1) to (i) acquire images, (ii) analyze the acquired images for the visible markings (32), and (iii) adjust the mobile device (1) for changing at least one settings based on detection of the visible markings (32).

2. The system of claim 1, wherein the case (12) further comprises:
a frame (11) configured with guides running along two sides; and
a plurality of hinged panels (14, 15, 17, 18) engaged with the guides so that the panels may be slid along the guides and folded into different configurations (20, 21).

3. The indicia reading system (20) according to claim 1, wherein the application running on the mobile device (1) senses the visible markings (32) and configures the mobile device (1) to trigger the activation of the illuminator (5).

4. The indicia reading system (20) of claim 2 wherein the mirror (22) is disposed on at least one of the plurality of hinged panels (14, 15, 17, 18).

5. The indicia reading system (20) according to claim 1, comprising a lens (23) integrated with the case (12) for adjusting the focus of the camera (4) when the mirror (22) is moved into the camera's field-of-view.

6. The indicia reading system (20) according to claim 1, wherein the visible markings (32) cause the acquired images to be rotated in order to accommodate the mirror (22).

7. The indicia reading system (20) according to claim 1, wherein an aimer subsystem is electrically coupled to the mobile device (1) and controllable by the indicia reading application.

## Patentansprüche

1. Indizienlesesystem (20), umfassend:
eine mobile Vorrichtung (1), umfassend eine Kamera (4), einen Beleuchter (5) und einen Prozessor, der zum Ausführen von Anwendungen konfiguriert ist;
eine Hülle (12) zum Halten der mobilen Vorrichtung (1), die Hülle (12) umfassend einen Spiegel (22), der zwischen zwei Konfigurationen bewegbar ist, wobei der Spiegel zum Umlenken einer Bildgebungsrichtung der Kamera (4) vorgesehen ist, wenn der Spiegel (22) in ein Sichtfeld der Kamera bewegt wird;
**dadurch gekennzeichnet, dass** der Spiegel (22) sichtbare Markierungen (32) umfasst, die in Bildern des vom Spiegel (22) reflektierten Sichtfeldes erscheinen; und
das Indizienlesesystem (20) ferner eine Indizienleseanwendung umfasst, die auf der mobilen Vorrichtung (1) ausgeführt wird, wobei die Indizienleseanwendung die mobile Vorrichtung (1) konfiguriert, um (i) Bilder aufzunehmen, (ii) die aufgenommenen Bilder für die sichtbaren Markierungen (32) zu analysieren, und (iii) die mobile Vorrichtung (1) zum Ändern mindestens einer Einstellungen basierend auf der Detektion der sichtbaren Markierungen (32) einzustellen.

2. System nach Anspruch 1, wobei die Hülle (12) ferner umfasst:
einen Rahmen (11), der mit entlang von zwei Seiten verlaufenden Führungen konfiguriert ist; und
eine Vielzahl von angelenkten Platten (14, 15, 17, 18), die mit den Führungen in Eingriff stehen, sodass die Platten entlang der Führungen geglitten und in verschiedene Konfigurationen (20, 21) geklappt werden können.

3. Indizienlesesystem (20) nach Anspruch 1, wobei die auf der mobilen Vorrichtung (1) ausgeführte Anwendung die sichtbaren Markierungen (32) erfasst und die mobile Vorrichtung (1) konfiguriert, um die Aktivierung des Beleuchters (5) auszulösen.

4. Indizienlesesystem (20) nach Anspruch 2, wobei der Spiegel (22) auf mindestens einer der Vielzahl von angelenkten Platten (14, 15, 17, 18) angeordnet ist.

5. Indizienlesesystem (20) nach Anspruch 1, umfassend eine Linse (23), die in die Hülle (12) integriert ist, um den Fokus der Kamera (4) einzustellen, wenn der Spiegel (22) in das Sichtfeld der Kamera bewegt wird.

6. Indizienlesesystem (20) nach Anspruch 1, wobei die sichtbaren Markierungen (32) bewirken, dass die aufgenommenen Bilder gedreht werden, um den Spiegel (22) unterzubringen.

7. Indizienlesesystem (20) nach Anspruch 1, wobei ein Zieleinrichtungs-Teilsystem elektrisch mit der mobilen Vorrichtung (1) verbunden und durch die Indizienleseanwendung steuerbar ist.

## Revendications

1. Système de lecture d'indices (20) comprenant :
un dispositif mobile (1) comprenant une caméra (4), un illuminateur (5) et un processeur configuré pour exécuter des applications ;
un boîtier (12) destiné à contenir le dispositif mobile (1), le boîtier (12) comprenant un miroir (22) mobile entre deux configurations, le miroir permettant de rediriger une direction d'imagerie de la caméra (4) lorsque le miroir (22) est déplacé dans un champ de visée de la caméra ;
**caractérisé en ce que** le miroir (22) comprend des marques visibles (32) qui apparaissent dans les images du champ de visée réfléchi par le miroir (22) ; et
le système de lecture d'indices (20) comprend en outre une application de lecture d'indices s'exécutant sur le dispositif mobile (1), l'application de lecture d'indices configurant le dispositif mobile (1) (i) pour acquérir des images, (ii) pour analyser les images acquises pour les marques visible (32) et (iii) pour régler le dispositif mobile (1) pour modifier au moins un paramètres sur la base de la détection des marques visibles (32).

2. Système selon la revendication 1, dans lequel le boîtier (12) comprend en outre :
un cadre (11) conçu avec des guides s'étendant le long de deux côtés ; et
une pluralité de panneaux articulés (14, 15, 17, 18), en prise avec les guides de sorte que les panneaux puissent être glissés le long des guides et pliés selon différentes configurations (20, 21).

3. Système de lecture d'indices (20) selon la revendication 1, dans lequel l'application exécutée sur le dispositif mobile (1) détecte les marques visibles (32) et configure le dispositif mobile (1) pour déclencher l'activation de l'illuminateur (5).

4. Système de lecture d'indices (20) selon la revendication 2, dans lequel le miroir (22) est disposé sur au moins l'un des panneaux de la pluralité de panneaux articulés (14, 15, 17, 18).

5. Système de lecture d'indices (20) selon la revendication 1, comprenant une lentille (23), intégrée au boîtier (12) pour régler la mise au point de la caméra (4) lorsque le miroir (22) est déplacé dans son champ de visée.

6. Système de lecture d'indices (20) selon la revendication 1, dans lequel les marques visibles (32) provoquent la rotation des images acquises afin de loger le miroir (22).

7. Système de lecture d'indices (20) selon la revendication 1, dans lequel un sous-système de viseur est couplé électriquement au dispositif mobile (1) et réglable par l'application de lecture d'indices.
